# EUROPEAN PATENT APPLICATION

(11) **EP 3 875 214 A1**
(43) Date of publication of application: **08.09.2021**
(21) Application number: 18938917.4
(22) Date of filing: 29.10.2018
(51) Int. Cl.: B23Q 1/00, B23Q 1/58, F16C 29/00, G05B 19/404

(54) **MACHINING CENTER AND WORKPIECE PROCESSING METHOD**

(71) Applicant: Makino Milling Machine Co., Ltd., Tokyo 152-8578 (JP)
(72) Inventor: SANO, Yuji, Minamitsuru-gun, Yamanashi 401-0310 (JP)
(74) Representative: McWilliams, David John
(86) International application number: PCT/JP2018/040181
(87) International publication number: WO 2020/089982

(57) **Abstract**

A machining center (100) is provided with: a base (1); a table (2) that supports a workpiece (WR); a main-shaft head (5) that causes a tool (T) to rotate around an axis of rotation (Os) of a main-shaft (6); a Z-axis drive device (11) that causes the table (2) to move with respect to the base (1) along a Z axis parallel to the axis of rotation (Os) of the main-shaft (6); a W-axis drive device (15) that causes the main-shaft head (5) to move with respect to the base (1) along a W axis parallel to the axis of rotation (Os) of the main-shaft (6); and a control device (7) that controls the Z-axis drive device (11) and the W-axis drive device (15) so as to cause the tool (T) to process the workpiece (WR) by causing the table (2) and the main-shaft head (5) to move along the Z axis and the W axis, respectively.

## Description

### FIELD

The present disclosure relates to a machining center and a workpiece machining method.

### BACKGROUND

Machining centers rotate a tool, and can machine a workpiece while moving the tool and the workpiece relative to each other in a direction parallel to the axis of rotation of the tool (for example, hole drilling, etc.). For example, Patent Literature 1 discloses a five-axis composite machine tool capable of holding two tools, i.e., a tool for machining large diameter holes and a tool for machining small diameter holes. In this machine tool, a cutter holder moves in the vertical direction on a cutter holder guide. The cutter holder comprises a tool mounting part. The tool mounting part holds the tool for machining large diameter holes. The tool held in the tool mounting part is configured so as to be moved in the vertical direction by moving the cutter holder. Further, in this machine tool, a ram moves on the cutter holder described above in the vertical direction. The ram holds the tool for machining small diameter holes. The ram is configured to be movable in the vertical direction by two methods, by both moving the ram relative to the cutter holder and moving the cutter holder relative to the cutter holder guide. The ram is configured so as to be moved by the movement of the cutter holder when approaching the workpiece and by the movement of the ram when entering or exiting the hole.

### [CITATION LIST]

### [PATENT LITERATURE]

[PTL 1] Japanese Unexamined Patent Publication (Kokai) No. 2007-966

### SUMMARY

### [TECHNICAL PROBLEM]

In the field of machining centers, the machining of workpieces at higher speeds is desired. However, for example, when forming a deep hole in the workpiece, a long feed is required, whereby a long machining time is necessary. Thus, an object of the present disclosure is to provide a machining center and a workpiece machining method with which workpieces can be machined at higher speeds.

### [SOLUTION TO PROBLEM]

An aspect of the present disclosure provides a machining center which moves a workpiece and a rotating tool relative to each other to machine the workpiece, the machining center comprising a base, a table on which the workpiece is supported, a spindle head which rotates the tool about an axis of rotation of a spindle, a Z-axis drive device which moves the table relative to the base along a Z-axis, which is parallel to the axis of rotation of the spindle, a W-axis drive device which moves the spindle head relative to the base along a W-axis, which is parallel to the axis of rotation of the spindle, and a controller which controls the Z-axis drive device and the W-axis drive device to move the table and the spindle head along the Z-axis and the W-axis, respectively, whereby the rotating tool machines the workpiece.

In the machining center according to an aspect of the present disclosure, the table and the spindle head move along the parallel Z-axis and W-axis, respectively, whereby the tool machines the workpiece. Thus, the feeding between workpiece and tool is achieved by moving both the table and the spindle head. Therefore, the workpiece can be machined at a higher speed than when only one of the workpiece and the tool is fed.

The machining center may further comprise a Y-axis drive device which moves the spindle head relative to the base along a Y-axis, which is orthogonal to the axis of rotation of the spindle, and a B-axis drive device which rotates the table along a B-axis about an axis of rotation which is parallel to the Y-axis, and the controller may control at least one of the Y-axis drive device and the B-axis drive device so as to correct a parallelism error between the Z-axis and the W-axis by at least one of moving the spindle head along the Y-axis and rotating the table along the B-axis based on the parallelism error. In the machining center according to the aspect of the present disclosure, since the feeding between the workpiece and the tool is achieved by both movement along the Z-axis and movement along the W-axis, parallelism errors between the Z-axis and the W-axis can affect machining accuracy. Thus, the controller controls at least one of the movement of the spindle head along the Y-axis and the rotation of the table about the B axis so as to correct the parallelism error, whereby the influence of parallelism errors can be reduced. Thus, the workpiece can be machined with high accuracy.

Likewise, the machining center may further comprise a Y-axis drive device which moves the spindle head relative to the base along a Y-axis, which is orthogonal to the axis of rotation of the spindle, and an X-axis drive device which moves the spindle head relative to the base along an X-axis, which is orthogonal to both the axis of rotation of the spindle and the Y-axis, and the controller may control at least one of the Y-axis drive device and the X-axis drive device so as to correct a parallelism error between the Z-axis and the W-axis by at least one of moving the spindle head along the Y-axis and moving the spindle head along the X-axis based on the parallelism error. In this case as well, the controller controls at least one of the movement of the spindle head along the Y-axis and the rotation of the table about the B axis so as to correct the parallelism error, whereby the influence of parallelism errors can be reduced. Thus, the workpiece can be machined with high accuracy.

Another aspect of the present disclosure provides a workpiece machining method for moving, in a machining center, a workpiece and a rotating tool relative to each other to machine the workpiece, the machining center comprising a base, a table on which the workpiece is supported, a spindle head which rotates the tool about an axis of rotation of a spindle, a Z-axis drive device which moves the table relative to the base along a Z-axis, which is parallel to the axis of rotation of the spindle, and a W-axis drive device which moves the spindle head relative to the base along a W-axis, which is parallel to the axis of rotation of the spindle, the workpiece machining method comprising the steps of rotating the tool, and controlling the Z-axis drive device and the W-axis drive device to move the table and the spindle head along the Z-axis and the W-axis, respectively, whereby the rotating tool machines the workpiece. According to this method, workpieces can be machined at a higher speed in the same manner as described above.

### [ADVANTAGEOUS EFFECTS OF INVENTION]

According to the aspect of the present disclosure, there can be provided a machining center and a workpiece machining method with which workpieces can be machined at higher speeds.

### BRIEF DESCRIPTION OF DRAWINGS

FIG. 1 is a schematic side view showing a system comprising a machining center according to an embodiment.
FIG. 2 is a schematic side view showing the machining center of FIG. 1 when forming a hole in a workpiece.
FIG. 3 is a schematic top view of the machining center of FIG. 1.
FIG. 4 is a schematic side view of the machining center of FIG. 1 when a table and a spindle head approach each other.
FIG. 5 is a schematic side view showing the machining center of FIG. 1 when the table and the spindle head are separated.
FIG. 6 is a schematic top view showing a parallelism error between the Z-axis and the W-axis.
FIG. 7 is a schematic top view showing an example for correcting parallelism error.
FIG. 8 is a schematic side view showing a workpiece exchange operation in the system of FIG. 1.
FIG. 9 is a schematic side view showing the operation which follows FIG. 8.
FIG. 10 is a schematic side view showing the operation which follows FIG. 9.
FIG. 11 is a timing chart showing the operations of the machining center and a robot during the workpiece exchange operation.

### DESCRIPTION OF EMBODIMENTS

The machining center and workpiece machining method according to an embodiment will be described below with reference to the attached drawings. Identical or corresponding elements have been assigned the same reference sign, and duplicate descriptions thereof have been omitted. In order to facilitate understanding, the scales of the drawings have been changed in some cases, and the constituent elements shown in some drawings may be omitted in other drawings.

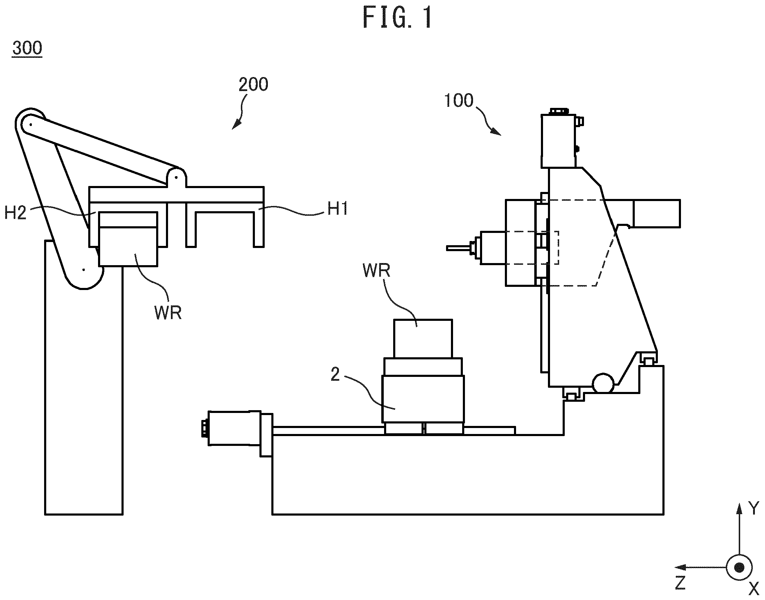

FIG. 1 is a schematic side view showing a system 300 comprising a machining center 100 according to an embodiment. The system 300 may include, for example, the machining center 100 and a robot 200. The system 300 may further comprise other components. In the system 300, for example, the robot 200 can move along a predetermined path (not illustrated) and a plurality of machining devices including the machining center 100 can be arranged along the path of the robot 200. Note that in FIG. 1, for clarity, only one machining device (i.e., only the machining center 100) is shown. For example, the robot 200 can convey a workpiece WR from an adjacent machining device (not illustrated) to the machining center 100, or can convey the workpiece WR from the machining center 100 to an adjacent machining device.

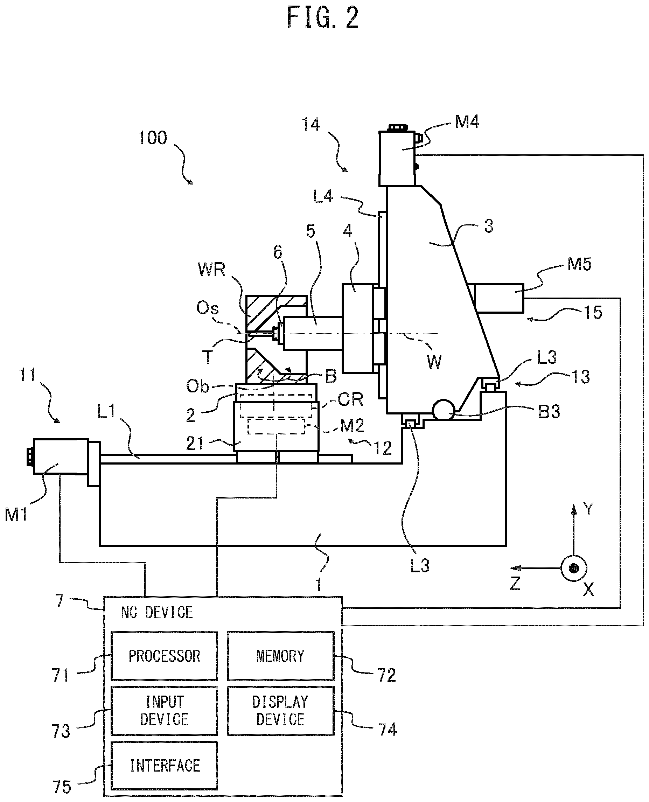

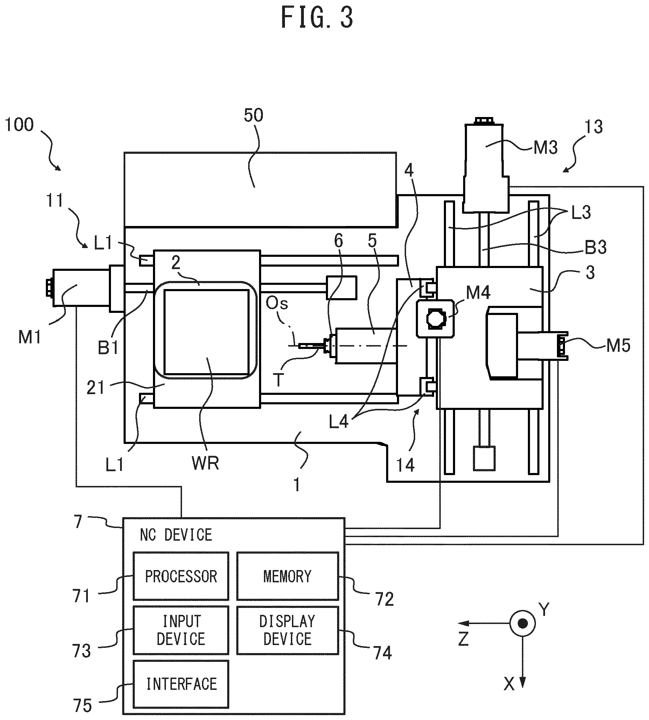

FIG. 2 is a schematic side view showing the machining center 100 of FIG. 1 when forming a hole in the workpiece WR. The machining center 100 can be, for example, horizontal, and the axis of rotation Os of a spindle 6 is set in the horizontal direction. The machining center 100 may be, for example, vertical. The machining center 100 rotates the tool T, and can machine (for example, holes, grooves, pockets, through holes, stepped portions, etc.) the workpiece WR while moving the tool T and the workpiece WR relative to each other in the direction parallel to the axis of rotation of the tool T. The machining center 100 may comprise, for example, a bed (base) 1, a table 2, a column 3, a spindle head base 4, a spindle head 5, a spindle 6, an NC device (controller) 7, and an automatic tool exchange device 50 (refer to FIG. 3). The machining center 100 may further comprise other components.

Regarding the machine coordinate system of the machining center 100, the direction parallel to the axis of rotation Os is the Z-axis direction (also referred to as the front-rear directions). The side where the table 2 lies relative to the column 3 is the front and the side opposite thereto is the rear. The vertical direction is the Y-axis direction (also referred to as the up-down directions), the direction perpendicular to both the Z-axis and the Y-axis is the X-axis direction (also referred to as the left-right directions).

With reference to FIG. 2, the bed 1 can be installed, for example, on a floor of a factory. The table 2 supports the workpiece WR. The workpiece WR may be attached directly to the table 2 with a jig, or in other embodiments, the workpiece WR may be attached indirectly to the table 2 via a pallet. The table 2 is movable on the bed 1 via a table base 21.

FIG. 3 is a schematic top view of the machining center 100 of FIG. 1. The machining center 100 comprises a Z-axis drive device 11 for moving the table base 21 along the Z-axis relative to the bed 1. The Z-axis drive device 11 has a pair of linear guides L1 arranged on the bed 1 along the Z-axis, and the table base 21 moves on the rails of the linear guides L1. The Z-axis drive device 11 further comprises a ball screw B1 connected to the table base 21, and a motor M1 for rotating the ball screw B1. The Z-axis drive device 11 may further include a scale for measuring the Z-axis coordinate value of the table base 21. The feeding of the table base 21 in the Z-axis direction by the Z-axis drive device 11 is controlled by the NC device 7.

With reference to FIG. 2, the machining center 100 comprises a B-axis drive device 12 for rotating the table 2 along the B-axis about the axis of rotation Ob, which is parallel to the Y-axis. The B-axis drive device 12 may have, for example, a cross roller bearing CR for rotatably coupling the table 2 to the table base 21, and a motor M2 for rotating the table 2. The B-axis drive device 12 may have other structures. The motor M2 may comprise, for example, an encoder or the like for measuring the rotational position of the table 2 about the axis of rotation Ob. The feeding of the table 2 in the B-axis direction by the B-axis drive device 12 is controlled by the NC device 7.

The column 3 is movably arranged on the bed 1 so as to face the table 2 in the Z-axis direction. The machining center 100 comprises an X-axis drive device 13 for moving the column 3 along the X-axis. The X-axis drive device 13 has a pair of linear guides L3 arranged on the bed 1 along the X-axis, and the column 3 moves on the rails of the linear guides L3. In the present embodiment, the linear guide L3 in the rear is positioned higher than the linear guide L3 in the front, and the virtual plane connecting the linear guide L3 in the rear and the linear guide L3 in the front is inclined with respect to the horizontal direction. Due to such a configuration, the bed 1 can efficiently receive the machining reaction force.

The X-axis drive device 13 further includes a ball screw B3 connected to the column 3, and a motor M3 for rotating the ball screw B3 (FIG. 3). The X-axis drive 13 may further comprise a scale for measuring the X-axis coordinate value of the column 3. The feeding of the column 3 in the X-axis direction by the X-axis drive device 13 is controlled by the NC device 7.

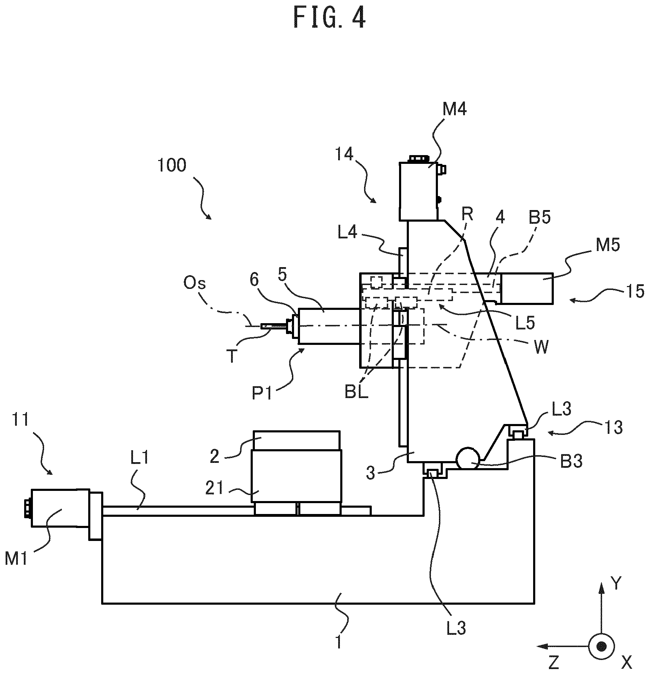

FIG. 4 is a schematic side view showing the machining center 100 of FIG. 1 when the table 2 and the spindle head 5 approach each other. The spindle head base 4 is movably arranged on the column 3. The spindle head base 4 penetrates from the front surface to the rear surface of the column 3. The machining center 100 comprises a Y-axis drive device 14 for moving the spindle head base 4 along the Y-axis. The Y-axis drive device 14 has a linear guide L4 arranged along the Y-axis on the front surface of the column 3, and the spindle head base 4 moves on the rail of the linear guide L4. The Y-axis drive device 14 further includes a ball screw (not illustrated) connected to the spindle head base 4, and a motor M4 for rotating the ball screw. The Y-axis drive device 14 may further include a scale for measuring the Y-axis coordinate value of the spindle head base 4. The feeding of the spindle head base 4 in the Y-axis direction by the Y-axis drive device 14 is controlled by the NC device 7.

The spindle head 5 rotates the tool T about the axis of rotation Os of the spindle 6. The spindle head 5 is movably arranged on the spindle head base 4. The machining center 100 comprises a W-axis drive device 15 for moving the spindle head 5 along the W-axis, which is parallel to the axis of rotation Os of the spindle 6. Note that since the spindle head 5 and the spindle 6 are arranged concentrically, in FIG. 4, the axis of rotation Os of the spindle 6 and the W-axis of the spindle head 5 are shown coincident with each other. The W-axis drive device 15 has a linear guide L5 arranged along the W-axis in the interior of the spindle head base 4, and the spindle head 5 moves under the rail R of the linear guide L5. In the present embodiment, the rail R of the linear guide L5 is affixed to the spindle head base 4, a block BL is affixed to the spindle head 5, and the spindle head 5 is suspended from the spindle head base 4. Due to such a configuration, even if the rear linear guide L3 of the X-axis drive device 13 is arranged at a high position as described above, the column 3 including the W-axis drive device 15 can be compactly constructed. The W-axis drive device 15 further includes a ball screw B5 which is connected to the spindle head 5, and a motor M5 for rotating the ball screw B5. The W-axis drive device 15 may further have a scale for measuring the Z-axis coordinate value of the spindle head 5. The feeding of the spindle head 5 in the W-axis direction by the W-axis drive device 15 is controlled by the NC device 7.

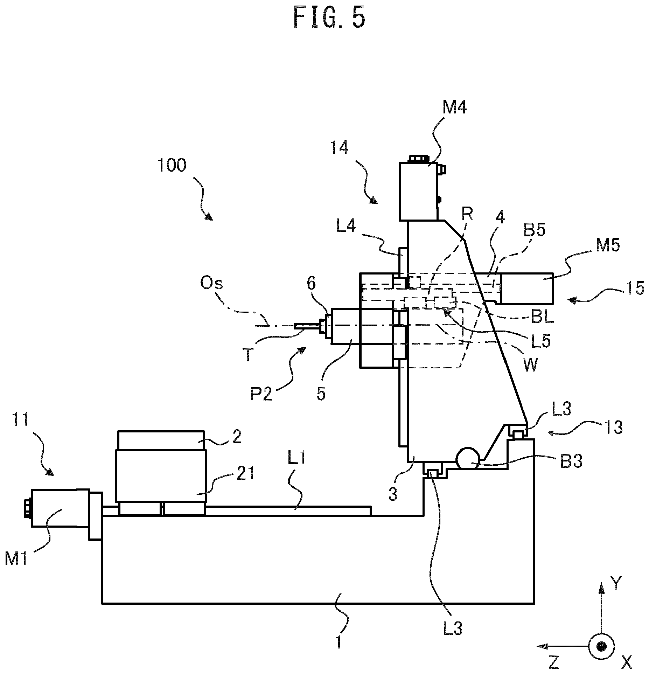

FIG. 5 is a schematic side view showing the machining center of FIG. 1 when the table 2 and the spindle head 5 are separated. With reference to FIGS. 4 and 5, the W-axis drive device 15 moves the spindle head 5 along the W-axis between a first position P1 on the most frontward side as shown in FIG. 4 and a second position P2 on the most rearward side as shown in FIG. 5. In the machining center 100, for example, the most frontward first position P1 (FIG. 4) can be set as the origin of the W-axis, the most rearward second position P2 (FIG. 5) can be set as the maximum stroke position of the W-axis. Note that in FIG. 4, the table 2 is positioned at the most frontward position, and in FIG. 5 is positioned at the most rearward position.

The spindle 6 is rotatably arranged in the interior of the spindle head 5. The spindle 6 holds the tool T. The rotation of the spindle 6 is controlled by the NC device 7.

With reference to FIG. 2, NC device 7 is configured to control, based on the NC program, the X-axis drive device 13, the Y-axis drive device 14, the Z-axis drive device 11, the W-axis drive device 15, and the B-axis drive device 12 described above. The NC device 7 may comprise, for example, a processor 71, a memory 72, an input device 73, a display device 74, and an interface 75, and these components are connected to each other by, for example, busses or the like. The NC device 7 may further comprise other components.

The processor 71 can be, for example, one or a plurality of CPUs (Central Processing Units). The memory 72 may include, for example, memory devices such as ROM (read-only memory), RAM (random access memory), and a hard disk drive. The memory 72 can store various programs executed by the processor 71. The input device 73 may include, for example, a mouse, a keyboard, a mechanical button, etc., and the display device 74 may include, for example, a liquid crystal display or an organic EL (Electro-Luminescence) display, etc. A touch panel may be used as the input device 73 and the display device 74. The interface 75 may have an interface circuit for connecting the NC device 7 to external devices. For example, the interface 75 may have a motor control unit for outputting a current value to the motors M1 to M5 of the drive devices 11 to 15 described above based on the NC program, and a signal indicating a position is fed back to the motor control unit from the scales and encoders of the drive devices 11 to 15 described above.

The NC device 7 is configured so as to be capable of controlling the Z-axis drive device 11 and the W-axis drive device 15 to synchronize the table 2 and the spindle head 5 with each other and move them so that they approach each other along the Z-axis and the W-axis, respectively, whereby the rotating tool T machines the workpiece WR (which will be described in detail later).

With reference to FIG. 3, the automatic tool exchange device 50 is arranged, for example, in a space on the left side of the spindle 6. Note that the automatic tool exchange device 50 may be arranged in a space on, for example, the right side or the upper side of the spindle 6. The automatic tool exchange device 50 may comprise, for example, a tool magazine capable of accommodating a plurality of tools T. Since the automatic tool exchange device 50 may be any of various types known in the prior art, a detailed description thereof has been omitted.

With reference to FIG. 1, the robot 200 can be, for example, a multi-axis articulated robot. The robot 200 may comprise, for example, a first hand H1 and a second hand H2. In the system 300, a workpiece WR held by the robot 200 can be exchanged with the workpiece WR on table 2 of the machining center 100 by a single entry of the robot 200 into the machining center 100 (which is described in detail later). For example, the robot 200 can be operated by a controller separate from the NC device 7, and when exchanging workpieces WR, the NC device 7 of the machining center 100 and the controller of the robot 200 can cooperatively communicate with each other.

Next, the operations of the machining center 100 will be described.

With reference to FIG. 2, as described above, when the workpiece WR is machined while the table 2 and the spindle head 5 move in synchronization with each other, the processor 71, based on the NC program, first sends a signal to the motor for rotating the spindle 6 to rotate the tool T. Next, the processor 71, based on the NC program, sends a signal to the motor M1 of the Z-axis drive device 11 and the motor M5 of the W-axis drive device 15 so that the table 2 and the spindle head 5 are moved in synch with each other along the Z-axis and the W-axis, respectively. For example, as shown in FIG. 2, when forming a deep hole in the workpiece WR, if only the table 2 is moved along the Z-axis, there is a risk that the machining time becomes longer. Furthermore, when a heavy workpiece WR is supported on the table 2, there is a risk that the movement of the table 2 becomes slow, which may also lead to a long machining time. The machining center 100, in addition to moving the table 2 along the Z-axis, can move the spindle head 5 simultaneously along the W-axis regardless of the weight of the workpiece WR, whereby a deep hole can be formed at a higher speed.

Note that as described above, though the machining center 100 can machine the workpiece WR while moving the table 2 and the spindle head 5 in synchronization with each other, the machining center 100 can likewise machine the workpiece WR while moving one of the table 2 and the spindle head 5 while leaving the other stationary depending on, for example, the type of machining (for example, shallow holes) etc.

Next, a tool exchange by the machining center 100 will be described. With reference to FIG. 3, when, for example, forming a deep hole in the workpiece WR, a long tool T can be used. If a long tool T is used, by moving the spindle 6 along the X-axis relative to the automatic tool exchange device 50 (or, if the automatic tool exchange device 50 is above the spindle 6, moving along the Y-axis), the tool T and the workpiece WR may interfere with each other.

In this case, for example, the tool T can be exchanged by an operation such as the following. After exchanging the tool T between the spindle 6 and the automatic tool exchange device 50, when inserting the tool T into the hole of the workpiece WR, first, the spindle head 5 is retracted along the W-axis to the most rearward second position P2 (FIG. 5). Next, the spindle head 5 is moved along the X-axis (or along the Y-axis) so that the tool T faces the hole of the workpiece WR. Thereafter, the spindle head 5 is advanced along the W-axis from the most rearward second position P2 to the desired position. By the above operation, the tool T can be inserted into the hole of the workpiece WR. When the tool T is returned to the automatic tool exchange device 50 after machining, the above operation can be performed in the reverse order. As described above, in the machining center 100, the tool T can be exchanged by moving only the spindle head 5 without moving the table 2. Since the table 2 may support a heavy workpiece WR, it is advantageous that the machining center 100 be capable of exchanging the tool T by moving only the spindle head 5, which is lighter.

Note that if the tool T is not long, the machining center 100 may exchange the tool T by moving the spindle head 5 along the X-axis or Y-axis without retracting the spindle head 5 to the most rearward second position P2. In this case, the tool T can be exchanged more quickly and machining can be started quickly.

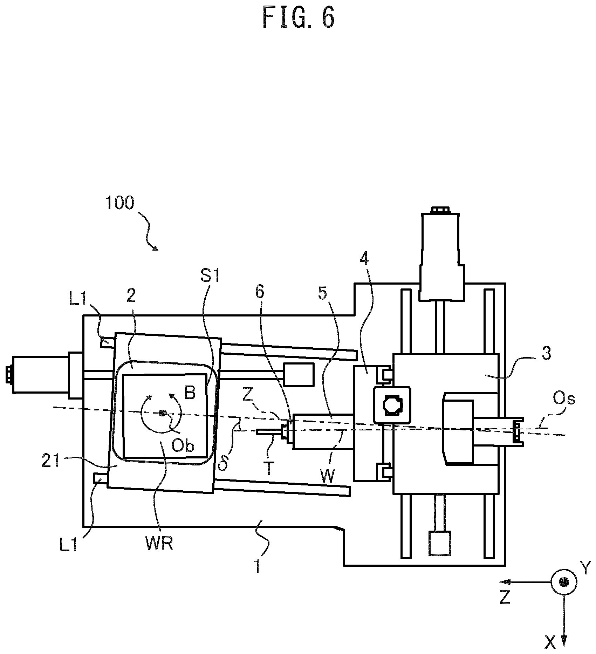

Next, the correction of the parallelism error δ in the machining center 100 will be described. FIG. 6 is a schematic top view showing a parallelism error between the Z-axis and the W-axis. In the example of FIG. 6, while the W-axis of the spindle head 5 is set as designed, the Z-axis of the table 2 is deviated by an error δ (degrees) about the Y-axis from the design. Note that in another example, while the W axis of spindle head 5 can deviate from design, the Z axis of table 2 can be set as designed. In the example of FIG. 6, the workpiece WR is substantially cubic, and a hole is formed perpendicularly in the side surface S1. In this case, it is assumed that the workpiece WR is arranged on the table 2 so that the side surface S1 is perpendicular to the axis of rotation Os (i.e., the W-axis of the spindle head 5) of the spindle 6.

In the machining center 100, since the feeding between the workpiece WR and the tool T is achieved by both movement along the parallel Z-axis and W-axis as described above, a parallelism error δ (degrees) between the Z-axis and W-axis may occur. Such parallelism error δ may occur, for example, during assembly of the machining center 100 and/or after prolonged use of the machining center 100. The parallelism error δ may affect the machining accuracy depending on the type of machining. For example, when forming a hole perpendicularly in the side surface S1 of the workpiece WR, as shown in FIG. 6, when the workpiece WR is arranged so that the side surface S1 is perpendicular to the W-axis of the spindle head 5, due to the parallelism error δ, the side surface S1 may not be perpendicular to the Z-axis of the table 2 (i.e., the movement direction of the workpiece WR). In this case, there is a risk that a hole perpendicular to the side surface S1 of the workpiece WR cannot be formed. Thus, the machining center 100 is configured to correct the parallelism error δ.

Specifically, prior to correction, the parallelism error δ is measured. The parallelism error δ can be measured, for example, by the following operation. First, a measurement probe (not illustrated) is mounted on the spindle 6. The NC device 7 may be configured to receive a skip signal output from the measurement probe and position signals output from the scales and encoders of the drive devices 11 to 15 when the measurement probe contacts the table 2 or an object (for example, a standard device) on the table 2, whereby the coordinate values of the measurement probe are measured.

Next, when the spindle head 5 is at the most frontward first position P1 (FIG. 4), the measurement probe is brought into contact with a predetermined portion of the table 2 or the object on the table 2, and the coordinate value of the measurement probe at the first position P1 is measured. Next, the table 2 and the spindle head 5 are moved to the rear side along the Z-axis and the W-axis, respectively, and when the spindle head 5 is in the most rearward second position P2 (FIG. 5), the measurement probe is brought into contact with the same predetermined portion of the table 2 or the object on the table 2 and the coordinate value of the measurement probe at the second position P2 is measured. The parallelism error δ (degree) between the Z-axis and the W-axis can be then measured based on the coordinate values at the first position P1 and the second position P2 of the measurement probe. Part or all of the above operations may be performed manually by an operator via the input device 73 or automatically by the processor 71 in accordance with a program stored in the memory 72. The calculated parallelism error δ can be stored in, for example, the memory 72.

With reference to FIG. 6, when a hole is formed perpendicularly in the side surface S1 of the workpiece WR as described above, the processor 71 of the NC device 7 controls the B-axis drive device 12 so as to rotate the table 2 along the B-axis in a direction to offset the parallelism error δ stored in the memory 72 in accordance with the program stored in the memory 72.

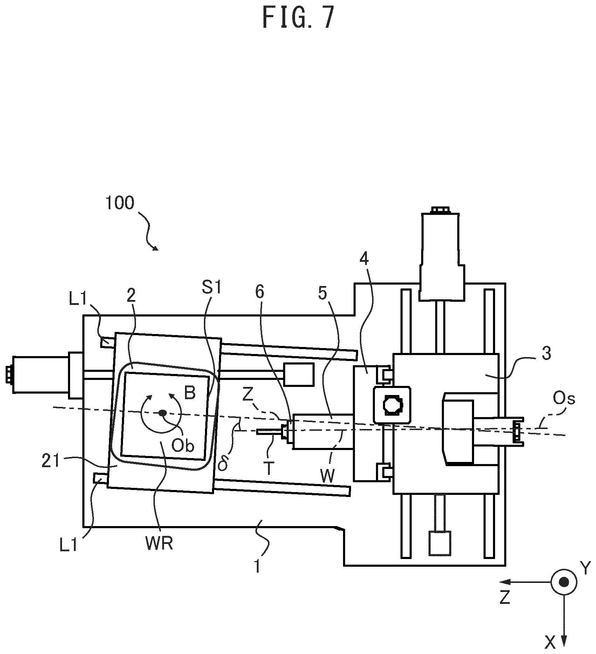

FIG. 7 is a schematic top view showing an example for correcting a parallelism error, and the table 2 is rotated in a direction to compensate for the parallelism error δ. As shown in FIG. 7, by rotating the table 2, the workpiece WR is arranged so that the side surface S1 is perpendicular to the Z-axis of the table 2. Due to such a configuration, the workpiece WR can be moved in the Z-axis direction while maintaining the side surface S1 perpendicular to the movement direction of the table 2.

In the embodiment described above, since the parallelism error δ contains only a component about the Y-axis, the NC device 7 controls only the B-axis drive device 12 to rotate the table 2. Alternatively or additionally, depending on the components included in the parallelism error δ, the NC device 7 may control the Y-axis drive device 14 to raise or lower the spindle head 5 along the Y-axis. Furthermore, alternatively or additionally, depending on the components included in the parallelism error δ, the NC device 7 may control the X-axis drive device 13 to move the spindle head 5 along the X-axis.

Next, an exchange of the workpiece WR by the robot 200 will be described.

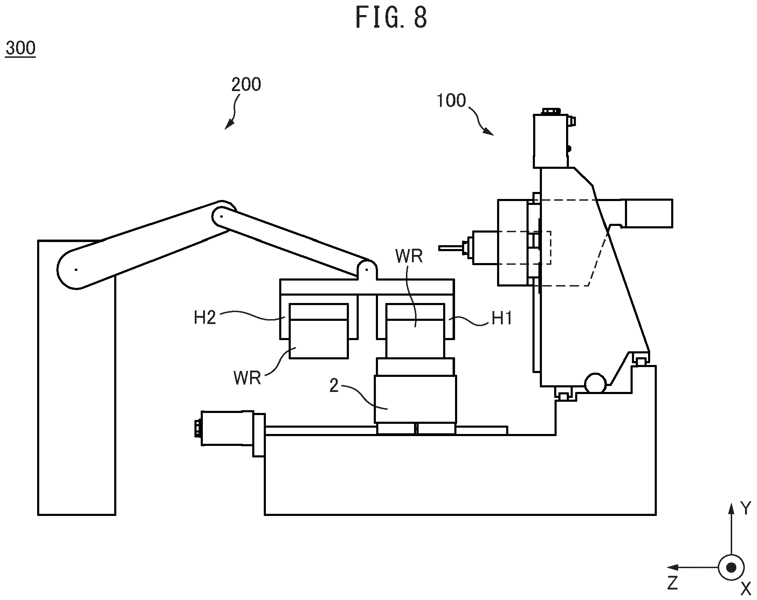

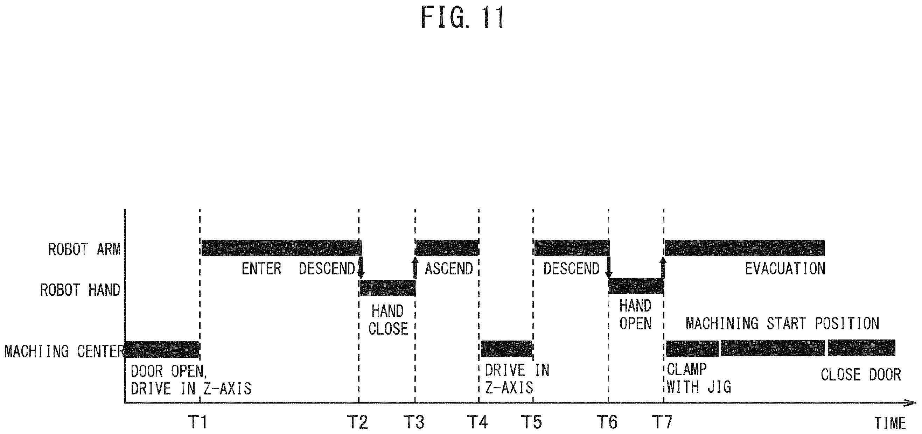

With reference to FIG. 1, as described above, in the system 300, the workpiece WR held by the robot 200 and the workpiece WR on the table 2 of the machining center 100 can be exchanged by only a single entry of the robot 200 into the machining center 100. In the example of FIG. 1, the hand H1 is empty and the hand H2 holds the workpiece WR. FIGS. 8 to 10 are schematic side views showing the workpiece WR exchange operation in the system 300 of FIG. 1, and FIG. 11 is a timing chart illustrating the operations of the machining center 100 and the robot 200 during this time.

With reference to FIGS. 1 and 11, in the system 300, first, the door (not illustrated) of the machining center 100 is opened, and the table 2 moves along the Z-axis to a predetermined workpiece exchange position. Next, with reference to FIGS. 8 and 11, at time T1, the arm of the robot 200 begins to extend, and enters to a position above the workpiece exchange position in the machining center 100. At time T2, the arm of the robot 200 descends so that the empty hand H1 surrounds the workpiece WR on the table 2, and the hand H1 closes to hold the workpiece WR.

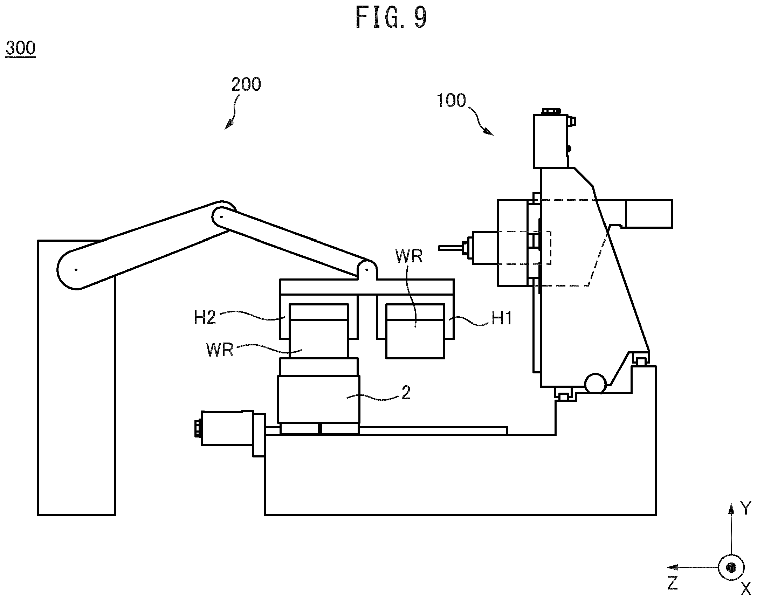

With reference to FIGS. 9 and 11, at time T3, the arm of the robot 200 ascends. At time T4, the table 2 moves along the Z axis to a position below the workpiece WR held by the hand H2. Next, at time T5, the arm of the robot 200 descends so that the workpiece WR held by the hand H2 is placed on the table 2.

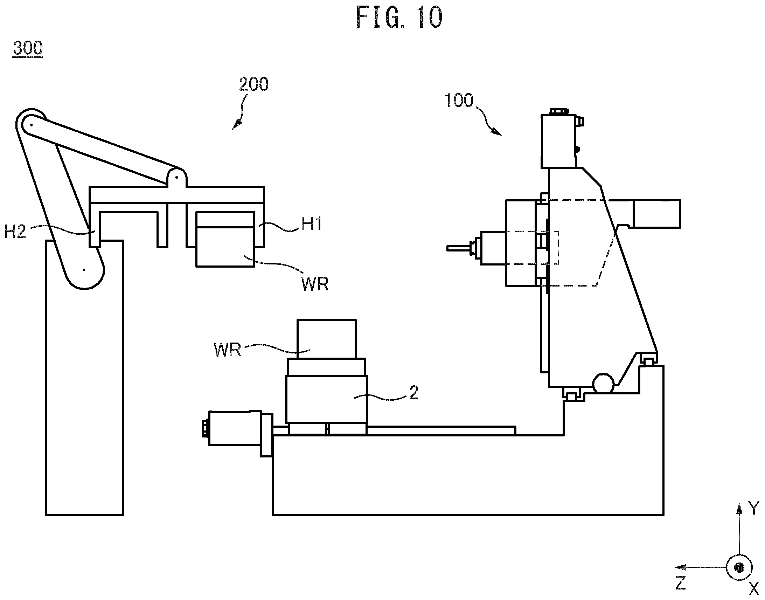

With reference to FIGS. 10 and 11, at time T6, the hand H2 opens and the workpiece WR is supported by the table 2. Next, at time T7, the arm of the robot 200 exits the machining center 100, a jig (not illustrated) on the table 2 of the machining center 100 clamps the workpiece WR. The table 2 then moves along the Z-axis to the machining start position, and the door is closed. As a result of the series of operations described above, the workpiece WR held by the robot 200 and the workpiece WR on the table 2 of the machining center 100 are exchanged by a single entry of the robot 200 into the machining center 100. Thus, the workpiece WR can be exchanged quickly.

Note that in FIG. 8, though the machining center 100 exchanges the workpiece WR in a state in which the spindle head 5 protrudes, when the workpiece WR is a large workpiece, the machining center 100 retracts the spindle head 5 along the W-axis to the rear second position P2, whereby the system 300 can exchange the large workpiece without collision of the large workpiece with the tool T.

In the machining center 100 and the workpiece machining method according to the embodiment described above, the Z-axis drive device 11 and the W-axis drive device 15 are controlled so as to move the table 2 and the spindle head 5 along the Z-axis and W-axis, respectively, whereby the tool T machines the workpiece WR. Thus, the feeding between the workpiece WR and the tool T is achieved by the movement of both the table 2 and the spindle head 5. Therefore, the workpiece WR can be machined at a higher speed as compared with the case in which only one of the workpiece WR and the tool T is fed.

Furthermore, in the machining center 100, the NC device 7 controls at least one of the Y-axis drive device 14 and the B-axis drive device 12 so as to correct the parallelism error δ by at least one of moving the spindle head 5 along the Y-axis and rotating the table 2 along the B-axis based on the parallelism error δ between the Z-axis of the table 2 and the W-axis of the spindle head 5. Thus, the impact of the parallelism error δ can be reduced. Therefore, the workpiece WR can be machined with high accuracy.

Likewise, in the machining center 100, the NC device 7 may control at least one of the Y-axis drive device 14 and the X-axis drive device 13 so as to correct the parallelism error δ by at least one of moving the spindle head 5 along the Y-axis and moving the spindle head 5 along the X-axis based on the parallelism error δ between the Z-axis of the table 2 and the W-axis of the spindle head 5. In this case as well, the impact of the parallelism error δ can be reduced. Thus, the workpiece WR can be machined with high accuracy.

While embodiments of the machining center and the workpiece machining method have been described, the present invention is not limited to the above embodiments. A person skilled in the art would understand that various modifications can be made to the above embodiments. It will also be understood by a person skilled in the art that the steps of the method described above may be carried out in different orders than described above as long as no inconsistencies are brought about thereby.

### REFERENCE SIGNS LIST

- 1: Bed (Base)
- 2: Table
- 5: Spindle Head
- 6: Spindle
- 7: NC Device (Controller)
- 1: Z-axis drive device
- 12: B-axis Drive Device
- 13: X-axis Drive Device
- 14: Y-axis Drive Device
- 15: W-axis Drive Device
- 100: Machining Center
- Ob: Axis of Rotation of Table
- Os: Axis of Rotation of Spindle
- T: Tool
- WR: Workpiece
- δ: Parallelism Error

## Claims

1. A machining center which moves a workpiece and a rotating tool relative to each other to machine the workpiece, the machining center comprising:
a base,
a table on which the workpiece is supported,
a spindle head which rotates the tool about an axis of rotation of a spindle,
a Z-axis drive device which moves the table relative to the base along a Z-axis, which is parallel to the axis of rotation of the spindle,
a W-axis drive device which moves the spindle head relative to the base along a W-axis, which is parallel to the axis of rotation of the spindle, and
a controller which controls the Z-axis drive device and the W-axis drive device to move the table and the spindle head along the Z-axis and the W-axis, respectively, whereby the rotating tool machines the workpiece.

2. The machining center according to claim 1, further comprising:
a Y-axis drive device which moves the spindle head relative to the base along a Y-axis, which is orthogonal to the axis of rotation of the spindle, and
a B-axis drive device which rotates the table along a B-axis about an axis of rotation which is parallel to the Y-axis, wherein
the controller controls at least one of the Y-axis drive device and the B-axis drive device so as to correct a parallelism error between the Z-axis and the W-axis by at least one of moving the spindle head along the Y-axis and rotating the table along the B-axis based on the parallelism error.

3. The machining center according to claim 1, further comprising:
a Y-axis drive device which moves the spindle head relative to the base along a Y-axis, which is orthogonal to the axis of rotation of the spindle, and
an X-axis drive device which moves the spindle head relative to the base along an X-axis, which is orthogonal to both the axis of rotation of the spindle and the Y-axis, wherein
the controller controls at least one of the Y-axis drive device and the X-axis drive device so as to correct a parallelism error between the Z-axis and the W-axis by at least one of moving the spindle head along the Y-axis and moving the spindle head along the X-axis based on the parallelism error.

4. A workpiece machining method for moving, in a machining center, a workpiece and a rotating tool relative to each other to machine the workpiece, the machining center comprising:
a base,
a table on which the workpiece is supported,
a spindle head which rotates the tool about an axis of rotation of a spindle,
a Z-axis drive device which moves the table relative to the base along a Z-axis, which is parallel to the axis of rotation of the spindle, and
a W-axis drive device which moves the spindle head relative to the base along a W-axis, which is parallel to the axis of rotation of the spindle, the workpiece machining method comprising the steps of:
rotating the tool, and
controlling the Z-axis drive device and the W-axis drive device to move the table and the spindle head along the Z-axis and the W-axis, respectively, whereby the rotating tool machines the workpiece.
